# FASCICULE DE BREVET EUROPEEN

(11) **EP 2 073 371 B1**
(45) Date de publication et mention de la délivrance du brevet: **03.04.2019**
(21) Numéro de dépôt: 08171175.6
(22) Date de dépôt: 10.12.2008
(51) Int. Cl.: H02P 9/00, H02J 7/14, H02P 9/30

(54) **PROCÉDÉ DE PILOTAGE D'UN ALTERNATEUR DE VÉHICULE AUTOMOBILE**
VERFAHREN ZUR STEUERUNG EINER LICHTMASCHINE EINES KRAFTFAHRZEUGS
METHOD OF CONTROLLING AN AUTOMOBILE ALTERNATOR

(30) Priorité: 21.12.2007 FR 0760176
(43) Date de publication de la demande: 24.06.2009
(73) Titulaire: PSA Automobiles SA, 78300 Poissy (FR)
(72) Inventeur: Clauzel, Jean-Philippe, 95280 Jouy Le Moutier (FR)
(74) Mandataire: Ménès, Catherine

(56) Documents cités:
- EP-A- 1 286 445
- WO-A-02/25794
- WO-A-2007/122344
- FR-A- 2 805 681
- FR-A- 2 876 514

## Description

La présente invention concerne un procédé de pilotage d'un alternateur de véhicule automobile. Elle concerne également un système pour la mise en oeuvre de ce procédé. L'invention trouve une application particulièrement avantageuse dans le domaine de la gestion de l'énergie électrique dans les véhicules automobiles.

L'apparition des alternateurs pilotés a très vite conduit à élaborer des stratégies de pilotage de la tension de régulation de l'alternateur en vue d'obtenir un gain substantiel de consommation du véhicule. En effet, après s'être contenté dans un premier temps d'appliquer à l'alternateur une tension de régulation constante élevée, coûteuse en carburant, les phases de vie du véhicule ont été prises en compte pour déterminer une tension de régulation adaptée dans la perspective de limiter au mieux la consommation du véhicule pendant chacune de ces phases. Dans la suite, trois phases de vie seront considérées, à savoir la décélération, le régime stabilisé et l'accélération du véhicule.

C'est ainsi qu'a été proposée une stratégie consistant à appliquer à l'alternateur une tension de régulation différente pour chaque phase de vie du véhicule. Pour une batterie de 12 V par exemple, on peut définir une tension de lestage de 14,5 V en phase de décélération, une tension de stabilisé de 13,6 V en régime stabilisé et une tension de délestage de 13,2 V en accélération. Les valeurs de ces tensions dépendent de caractéristiques propres à la batterie et sont fournies par les constructeurs de batteries.

Cependant, cette stratégie a très vite montré ses limites en particulier du fait qu'elle ne tient pas compte des paramètres définissant l'état réel de la batterie à un instant donné, tels que son état de charge et sa température, alors que la connaissance de ces paramètres est de première importance pour assurer un recharge efficace de la batterie en termes de consommation.

Le problème est d'autant plus complexe que l'alternateur doit à la fois assurer une charge suffisante de la batterie, et plus généralement du moyen de stockage d'énergie électrique du véhicule, et alimenter le réseau de bord du véhicule de manière à fournir les prestations attendues. Or, il s'avère que le pilotage de l'alternateur pour un besoin précis se fait souvent au détriment d'autres fonctions du véhicule. Par exemple, si on souhaite privilégier la consommation, on pénalise la charge de la batterie. Par contre, si on charge trop la batterie, on engendre un délestage de prestations sur le réseau de bord et une augmentation de la consommation.

Les documents WO02/25594A correspondant au préambule de la revendication 1, WO2007/122344A et FR2876514 divulguent des procédés de pilotage d'un alternateur de véhicule automobile.

Aussi, un but de l'invention est de proposer un procédé de pilotage de l'alternateur qui permettrait de définir une tension de régulation optimale prenant en compte les phases de vie du véhicule, les besoins du réseau du bord et de charge du moyen de stockage, sans exclure les situations d'urgence.

Ce but est atteint, conformément à l'invention grâce à un procédé de pilotage d'un alternateur de véhicule automobile en fonction de phases de vie du véhicule, ledit alternateur étant apte à alimenter un moyen de stockage d'énergie électrique dudit véhicule, comprenant des étapes consistant à :
- définir des grandeurs de régulation pour le pilotage de l'alternateur,
- mesurer des paramètres d'état concernant au moins ledit moyen de stockage,
- acquérir la phase de vie courante du véhicule,
- calculer en temps réel une valeur de consigne pour chaque grandeur de régulation en fonction des valeurs mesurées des paramètres d'état et de ladite phase de vie courante,
et comprenant encore les étapes consistant à :
- choisir une grandeur de régulation en fonction des valeurs mesurées des paramètres d'état et de ladite phase de vie courante,
- appliquer à l'alternateur une tension de régulation apte à maintenir la valeur de la grandeur de régulation choisie à la valeur de consigne associée.

Ainsi, le procédé selon l'invention propose de piloter l'alternateur de manière globale en tenant compte de la place centrale de l'alternateur entre le moteur, le réseau de bord et le moyen de stockage, lesquels constituent trois sous-systèmes dont les besoins en énergie sont rarement convergents. Cette prise en compte globale se fait en observant les paramètres d'état relatifs au moins au moyen de stockage. A partir de la mesure de ces paramètres et de l'acquisition de la phase de vie courante du véhicule, on choisit la grandeur de régulation sur laquelle doit être piloté l'alternateur par arbitrage entre les besoins et l'urgence des situations.

Selon l'invention, lesdits paramètres d'état concernent, séparément ou en combinaison, la tension, le courant, l'état de charge et la température dudit moyen de stockage.

L'invention prévoit cependant que lesdits paramètres d'état concernent également l'alternateur. En particulier, lesdits paramètres d'état comprennent le rapport cyclique d'ouverture du circuit d'excitation de l'alternateur.

Selon l'invention, lesdites grandeurs de régulation concernent, séparément ou en combinaison, la tension, le courant et l'état de charge du moyen de stockage d'énergie électrique du véhicule.

De même, l'invention prévoit que lesdites grandeurs de régulation concernent également l'alternateur. En particulier, lesdites grandeurs de régulation comprennent le rapport cyclique d'ouverture du circuit d'excitation de l'alternateur.

Selon un premier mode de réalisation de l'invention en phase de décélération, la grandeur de régulation est la tension appliquée au moyen de stockage et la valeur de consigne associée une tension de lestage définie en fonction de l'état de charge et de la température dudit moyen de stockage.

Par rapport à l'état de la technique où la tension de lestage est fixée une fois pour toutes, l'invention présente l'avantage de tenir compte des variations de cette tension avec l'état de charge du moyen de stockage, une batterie par exemple, et de sa température. Ceci conduit à une détermination beaucoup plus précise de la tension de lestage puisque les paramètres que sont l'état de charge et la température de la batterie font partie des paramètres d'état qui sont mesurés en permanence par un dispositif particulier appelé Boîtier d'Etat de Charge de la Batterie (BECB) qui, outre l'état de charge proprement dit, ou SOC (« State Of Charge »), et la température T, mesure également la tension et le courant de la batterie, désignés respectivement par Ubat et Ibat.

La connaissance des paramètres d'état SOC et T permet alors de définir la tension de lestage Ulest au moyen d'une cartographie établie par le constructeur de la batterie.

Selon un second mode de réalisation de l'invention en phase de décélération, la grandeur de régulation est le rapport cyclique d'ouverture du circuit d'excitation de l'alternateur et la valeur de consigne associée une valeur donnée dudit rapport cyclique d'ouverture.

De préférence, ladite valeur donnée du rapport cyclique d'ouverture est prise égale à une fraction donnée du rapport cyclique d'ouverture de saturation de l'alternateur. Cette disposition présente l'avantage de limiter les risques de délestage des consommateurs électriques du réseau de bord. A titre d'exemple, ladite fraction donnée de rapport cyclique d'ouverture est sensiblement égale à 80%.

On comprend que la phase de décélération est mise à profit pour recharger le moyen de stockage, l'énergie nécessaire à cette charge étant prise sur l'inertie du véhicule et non sur la consommation en carburant. A l'inverse, en régime stabilisé ou en phase d'accélération, on veillera à limiter la fourniture d'énergie à la batterie car, dans ces phases de vie, cette énergie est prélevée directement sur l'énergie mécanique développée par le moteur et donc sur la consommation en carburant.

Il est également prévu par l'invention qu'à l'issue de la phase de décélération, la grandeur de régulation est l'état de charge du moyen de stockage et la valeur de consigne associée une valeur de l'état de charge correspondant à un rendement de charge optimal dudit moyen de stockage.

Ainsi, après que la batterie, par exemple, ait été rechargée lors d'une phase de décélération, son état de charge SOC peut avoir augmenté pour atteindre une valeur dépassant le seuil pour lequel le rendement de charge est sensiblement égal à 1, par exemple 70%. Dans ce cas, la régulation sur l'état de charge ramène le SOC à cette valeur de 70%, ce qui a également pour effet de restituer au réseau de bord l'énergie emmagasinée lors de la charge au cours de la phase de décélération.

Puis, la régulation se fait conformément aux dispositions qui suivent concernant les phases de régime stabilisé et d'accélération.

Selon un premier mode de réalisation de l'invention en régime stabilisé, la grandeur de régulation est la tension appliquée au moyen de stockage et la valeur de consigne associée une tension de stabilisé définie en fonction de l'état de charge et de la température dudit moyen de stockage.

On obtient ainsi, comme pour la phase de décélération, une détermination plus précise de la tension de stabilisé Ustab à appliquer à la batterie, par exemple, puisqu'elle tient compte des paramètres d'état mesurés par le BECB que sont l'état de charge et la température.

Selon un second mode de réalisation de l'invention en régime stabilisé, la grandeur de régulation est le courant dans le moyen de stockage et la valeur de consigne associée une valeur de courant sensiblement nulle.

Selon un premier mode de réalisation de l'invention en phase d'accélération, la grandeur de régulation est la tension appliquée au moyen de stockage et la valeur de consigne associée une tension de délestage définie en fonction de l'état de charge et de la température dudit moyen de stockage.

Là encore, la tension de délestage Udelest est déterminée avec une bien meilleure précision par la prise en compte de l'état de charge de la batterie et de sa température.

Il faut également signaler que, s'agissant des phases de régime stabilisé et d'accélération, l'invention propose que ladite valeur de consigne est une combinaison des tensions de stabilisé et de délestage définie en fonction du rendement de charge du moyen de stockage. Par exemple, en régime stabilisé pour lequel la tension de stabilisé Ustab fournie par la cartographie constructeur est supérieure à la tension de délestage Udelest correspondante, il y a avantage à choisir comme valeur de consigne pour la tension de régulation non pas la valeur de Ustab mais celle de Udelest lorsque l'état de charge SOC est trop élevé, supérieur à 90% par exemple, car, dans ce cas, le rendement de charge est très faible et ne justifie pas l'application d'une tension de régulation inutilement élevée.

Selon un second mode de réalisation de l'invention en phase d'accélération, la grandeur de régulation est le courant dans le moyen de stockage et la valeur de consigne associée une valeur de courant sensiblement nulle.

L'invention concerne également un système de pilotage d'un alternateur de véhicule automobile en fonction de phases de vie du véhicule, ledit alternateur étant apte à alimenter un moyen de stockage d'énergie électrique dudit véhicule, remarquable en ce que ledit système comprend :
- un module de mesure de paramètres d'état concernant ledit moyen de stockage,
- un module d'acquisition des phases de vie du véhicule,
- un module de calcul de valeurs de consigne de grandeurs de régulation en fonction des valeurs mesurées des paramètres d'état et de la phase de vie courante,
- un module de choix de la grandeur de régulation en fonction des valeurs mesurés des paramètres d'état et de la phase de vie courante,
- un bloc multi-régulation destiné à appliquer à l'alternateur une tension de régulation apte à maintenir la valeur de la grandeur de régulation choisie à la valeur de consigne associée.

Selon l'invention, ledit système de pilotage comporte également un module de mesure de paramètres d'état concernant l'alternateur. En particulier, lesdits paramètres d'état comprennent le rapport cyclique d'ouverture du circuit d'excitation de l'alternateur.

La description qui va suivre en regard des dessins annexés, donnés à titre d'exemples non limitatifs, fera bien comprendre en quoi consiste l'invention et comment elle peut être réalisée.

La figure 1 est un schéma d'un système de pilotage conforme à l'invention.

La figure 2 est un graphe montrant les variations de l'état de charge SOC de la batterie pour différentes phases de vie du véhicule lors d'une mise en oeuvre du procédé de pilotage conforme à l'invention.

La figure 3 est un graphe de cartographie donnant la tension Ubat préconisée pour la charge d'une batterie en fonction de la température T pour des valeurs d'état de charge SOC de 90 et 70% et pour différentes phases de vie du véhicule.

La figure 4 est un graphe montrant un exemple de variation du rendement de charge d'une batterie en fonction de son état de charge SOC.

La figure 5 est un graphe donnant, en régime stabilisé, la valeur de la tension de charge de la batterie Ubat en fonction de l'état de charge SOC, dans le cas d'une régulation sur la tension Ubat.

La figure 6 est un graphe donnant, en phase d'accélération, la valeur de la tension de charge de la batterie Ubat en fonction de l'état de charge SOC, dans le cas d'une régulation sur la tension Ubat.

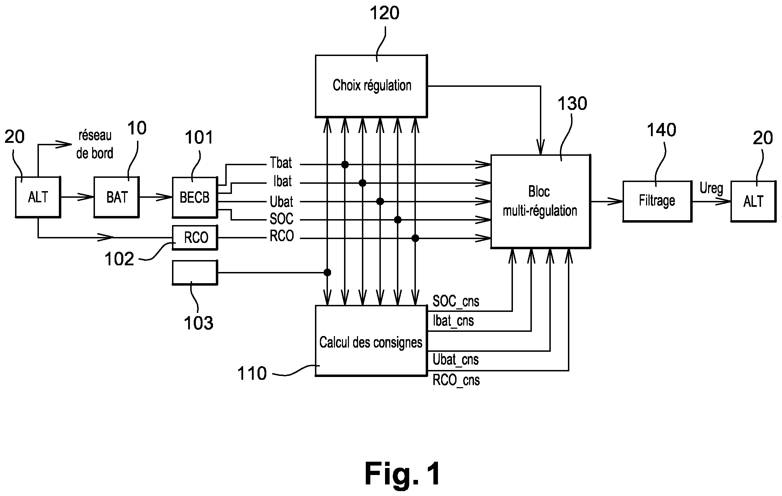

Sur la figure 1 est représenté un système de pilotage d'un alternateur 20 de véhicule automobile, destiné à transformer de l'énergie mécanique fournie par le moteur du véhicule en énergie électrique à partager entre le réseau de bord et un moyen de stockage d'énergie électrique constitué ici par une batterie 10.

Le système de pilotage de la figure 1 comprend divers modules d'acquisition de données, à savoir des modules 101, 102 de mesure de paramètres d'état et un module 103 d'acquisition des phases de vie du véhicule. On rappelle que les phases de vie considérées dans le cadre de l'invention sont les phases de décélération, le régime stabilisé et les phases d'accélération. Dans ce contexte, le module 103 est capable de fournir en sortie la phase de vie courante du véhicule.

Le module 101 concerne la mesure de paramètres d'état relatifs à la batterie 10. Les paramètres d'état de ce type qui seront pris en compte dans la suite de la description sont la tension Ubat, le courant Ibat, l'état de charge SOC et la température T, l'état de charge SOC étant exprimé en pourcentage de la capacité maximale en A.h que la batterie peut stocker. Les valeurs de ces différents paramètres sont mesurées en temps réel par le module 101 appelé aussi BECB (Boîtier d'Etat de Charge de la Batterie).

Le module 102 concerne la mesure de paramètres d'état relatifs à l'alternateur 20. Le seul paramètre d'état de cette nature qui sera pris en compte dans la suite est le rapport cyclique d'ouverture RCO du circuit d'excitation de l'alternateur. Ce paramètre est directement lié au courant injecté dans les enroulements du rotor de l'alternateur 20. Par convention, le rapport cyclique d'ouverture RCO sera exprimé en pourcentage du rapport cyclique d'ouverture de saturation de l'alternateur.

Au préalable, il est nécessaire de définir des grandeurs de régulation, c'est-à-dire des grandeurs dont la valeur de consigne de l'une d'entre elles doit être maintenue constante en appliquant à l'alternateur 20 une tension de régulation Ureg appropriée.

Les grandeurs de régulation prises en compte dans la suite sont la tension Ubat, le courant Ibat, l'état de charge SOC et le rapport cyclique d'ouverture RCO.

En conséquence, le système de pilotage de la figure 1 comprend un module 110 de calcul de valeurs de consigne, respectivement Ubat_cns, Ibat_cns, SOC_cns et RCO_cns, pour chacune des grandeurs de régulation définies ci-dessus. Ce calcul est effectué en fonction des valeurs des paramètres d'état fournies par les modules 101, 102 et en fonction de la phase de vie courante fournie par le module 103.

En parallèle, un module 120 à pour fonction de choisir celle des grandeurs de régulation dont la valeur de consigne doit être maintenue constante, ce choix étant réalisé également en fonction des valeurs des paramètres d'état fournies par les modules 101, 102 et en fonction de la phase de vie courante fournie par le module 103.

Les valeurs de consigne sont fournies à un bloc multi-régulation 130 qui reçoit par ailleurs du module 120 de choix de régulation l'information concernant la grandeur sur laquelle doit porter la régulation. Le bloc-multi-régulation 130 choisit alors la valeur de consigne correspondante et pilote en conséquence l'alternateur 20 en lui appliquant la tension de régulation Ureg permettant de maintenir constante cette valeur de consigne. Un module 140 de filtrage disposé entre le bloc multi-régulation 130 et l'alternateur 20 permet d'obtenir des variations de tension contrôlées afin de ne pas dégrader la qualité des prestations sur le réseau de bord. Si aucun consommateur électrique sensible n'est enclenché, les variations peuvent être rapides. Si, par contre, un consommateur sensible est activé, les variations doivent être limitées par le module 140 de filtrage à une pente, exprimée en V/s, définie par calibration.

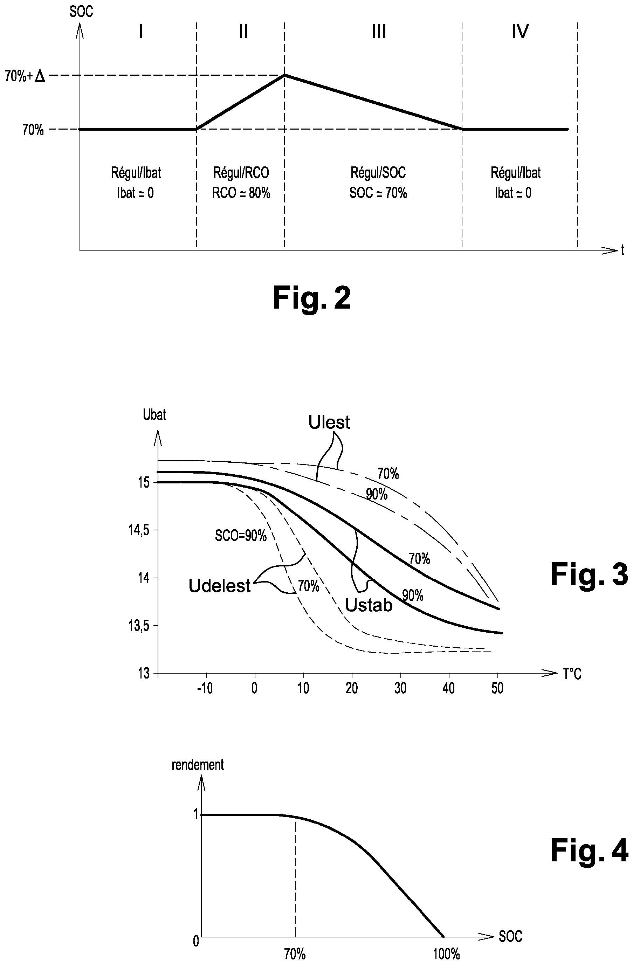

On a représenté sur la figure 2 comment l'alternateur 20 peut être piloté de manière optimale en termes de consommation de carburant. Cette figure montre les variations de l'état de charge SOC en fonction des phases de vie du véhicule.

La partie 1 correspond à une phase de régime stabilisé ou d'accélération. La régulation se fait sur le courant Ibat que l'on maintient à une valeur de consigne Ibat_cns positive mais voisine de zéro. Comme la batterie ne se charge pratiquement pas, l'état de charge SOC reste constant à une valeur initialement choisie de préférence égale à celle pour laquelle le rendement de charge est voisin de 1, de l'ordre par exemple de 70% comme l'indique la figure 4.

La partie II de la figure 2 correspond à une phase de décélération au cours de laquelle est mise à profit l'inertie du véhicule pour recharger la batterie 10 sans nuire à la consommation en carburant. La grandeur de régulation est dans ce cas le rapport cyclique d'ouverture RCO que l'on maintient à une valeur de consigne RCO_cns relativement élevée, de 80% par exemple, mais inférieure à 100% afin d'éviter la saturation de l'alternateur 20. On laisse en quelque sorte une marge qui est mise à disposition des consommateurs électriques du réseau de bord afin d'éviter qu'ils ne soient délestés si l'alternateur arrivait à saturation.

Bien entendu, à l'issue de cette phase l'état de charge SOC a augmenté pour passer de 70%, par exemple, à 70%+Δ.

La partie III de la figure 2 correspond à une phase de régime stabilisé ou d'accélération qui suit la phase de décélération illustrée à la partie II. Au cours de cette phase, et au lieu d'appliquer une régulation sur le courant Ibat comme dans la partie I, on effectue une régulation intermédiaire sur l'état de charge SOC en prenant pour valeur de consigne SOC_cns la valeur de rendement de charge maximum de 70% par exemple. Durant cette phase, la valeur de l'état de charge SOC passe donc de 70%+Δ à 70%, avec l'avantage que la batterie 10 fournit un courant Ibat négatif, restituant ainsi en faveur du réseau de bord au moins une partie de l'énergie électrique emmagasinée durant la charge de la batterie 10 qui s'est produite lors de la phase de décélération représentée à la partie II de la figure 2.

Enfin, après cette phase de régulation intermédiaire sur l'état de charge SOC, on repasse en partie IV à la régulation sur le courant Ibat comme dans la partie I.

Un autre mode de pilotage de l'alternateur 20 consiste à effectuer une régulation sur la tension Ubat aux bornes de la batterie 10 lors de situations d'urgence.

Pour cela, il faut définir la valeur de consigne Ubat_cns à utiliser pour assurer cette régulation.

Ce choix est réalisé au moyen d'un graphe de cartographie semblable à celui représenté sur la figure 3, lequel fournit des valeurs de tension Ubat préconisées par les constructeurs de batteries en fonction de la température T, de l'état de charge SOC de la batterie et de la phase de vie considérée. Pour simplifier le graphe, seules les valeurs de 90% et 70% de l'état de charge SOC ont été portées sur la figure 3. Les tensions Ubat à utiliser en phase de décélération, en régime stabilisé et en phase d'accélération sont désignées respectivement par Ulest (tension de lestage), Ustab (tension de stabilisé) et Udelest (tension de délestage). Ces trois tensions dépendent donc de l'état de charge SOC et de la température T de la batterie 10.

Ainsi, le module 110 de calcul des consignes est en mesure de calculer trois valeurs de consigne pour la tension Ubat, à savoir Ubat_cns_decel, Ubat_cns_stab et Ubat_cns_acc, qui doivent être appliquées à la grandeur de régulation Ubat selon la phase de vie du moteur courante reçue du module 103 et en fonction de l'état de charge SOC et de la température T fournies par le boîtier de mesure 101.

En phase de décélération, la consigne Ubat_cns_decel à utiliser pour Ubat peut être prise égale à la tension de lestage Ulest pour les valeurs de SOC et de T mesurées. Cette tension Ulest est la plus grande que l'on puisse appliquer à la batterie 10. Comme en décélération l'énergie provient de l'inertie du véhicule, elle ne représente pratiquement aucun coût en consommation.

De même, en régime stabilisé, on peut appliquer une consigne Ubat_cns_stab égale à la tension de stabilisé Ustab pour les valeurs de SOC et de T mesurées, afin d'augmenter légèrement l'état de charge de la batterie 10, mais sans trop pénaliser la consommation.

Enfin, en phase d'accélération, la tension de consigne Ubat_cns_acc peut être prise égale à la tension de délestage Udelest pour les valeurs de SOC et de T mesurées. Cette tension Udelest est la plus petite tension que l'on peut appliquer à la batterie 10 pour préserver son état de charge. Dans cette situation, on ne cherche pas spécialement à augmenter l'état de charge de la batterie. C'est donc lorsque cette tension est appliquée que le plus grand gain en consommation est attendu.

On peut encore affiner ce mode de régulation sur la tension Ubat en prenant en compte le rendement de charge de la batterie dont on a vu en regard de la figure 4 qu'il varie en fonction de l'état de charge SOC.

En phase de décélération, cette prise en compte du rendement n'a pas lieu d'être puisqu'en tout état de cause l'énergie n'est pas fournie par le carburant mais par l'inertie du véhicule.

Par contre, elle présente un intérêt en régime stabilisé et en phase d'accélération pour lesquels une augmentation de l'état de charge a un coût en consommation relativement élevé.

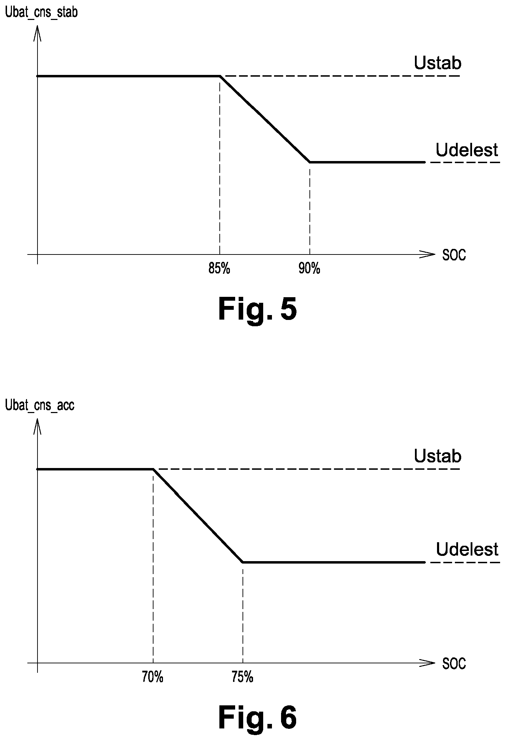

En régime stabilisé, et comme le montre la figure 5, la valeur de consigne Ubat_cns_stab peut être choisie égale à la tension de stabilisé Ustab pour des valeurs d'état de charge SOC inférieures par exemple à 85% correspondant à un rendement de charge supérieure à un seuil fixé de 0,7. A l'inverse, si le rendement est inférieur à 0,5 par exemple, pour un état de charge supérieur à 90%, il est plus judicieux en termes de rentabilité énergétique de corriger la tension de stabilisé Ustab pour effectuer la régulation de la valeur de consigne Ubat_cns_stab sur la tension de délestage Udelest plus faible, afin de minimiser l'énergie fournie à la batterie 10. Une loi linéaire entre 85% et 90% de SOC relie ces deux situations extrêmes. La tension de consigne Ubat_cns_stab est donc une combinaison des deux tensions Ustab et Udelest.

Il en est de même pour la valeur de consigne Ubat_cns_acc en phase d'accélération représentée sur la figure 6. Pour des valeurs de rendement très élevées, correspondant à un état de charge inférieure à 70% par exemple, il est plus rentable d'appliquer une tension proche de la tension de stabilisé Ustab plutôt que la tension de délestage Udelest. Par contre, lorsque l'état de charge augmente et dépasse 75%, le rendement de charge diminuant, on corrige la tension de stabilisé Ustab en effectuant la régulation de la valeur de consigne Ubat_cns_acc sur la tension de délestage Udelest plus faible, ce qui économise l'énergie fournie à la batterie 10. Ces deux situations extrêmes sont reliées par une loi linéaire.

## Revendications

1. Procédé de pilotage d'un alternateur (20) de véhicule automobile en fonction de phases de vie du véhicule, ledit alternateur étant apte à alimenter un moyen (10) de stockage d'énergie électrique dudit véhicule, comprenant des étapes consistant à :
- définir des grandeurs (U_{bat}, I_{bat}, SOC, RCO) de régulation pour le pilotage de l'alternateur (20),
- mesurer des paramètres (U_{bat}, I_{bat}, SOC, T, RCO) d'état concernant au moins ledit moyen (10) de stockage,
- acquérir la phase de vie courante du véhicule,
- calculer en temps réel une valeur de consigne (U_{bat_cns}, I_{bat_cns}, SOC__{cns}, RCO__{cns}) pour chaque grandeur de régulation en fonction des valeurs mesurées des paramètres d'état et de ladite phase de vie courante,
**caractérisé en ce qu'**il comprend encore les étapes consistant à :
- choisir une grandeur de régulation en fonction des valeurs mesurées des paramètres d'état et de ladite phase de vie courante,
- appliquer à l'alternateur une tension de régulation apte à maintenir la valeur de la grandeur de régulation choisie à la valeur de consigne associée.

2. Procédé selon la revendication 1, dans lequel lesdits paramètres d'état et/ou lesdites grandeurs de régulation concernent également l'alternateur (20).

3. Procédé selon la revendication 1 ou 2, dans lequel lesdits paramètres d'état concernent, séparément ou en combinaison, la tension (U_{bat}), le courant (I_{bat}), l'état de charge (SOC) et la température (T) dudit moyen (10) de stockage.

4. Procédé selon la revendication 3, dans lequel lesdits paramètres d'état comprennent le rapport cyclique d'ouverture (RCO) du circuit d'excitation de l'alternateur (20).

5. Procédé selon l'une des revendications précédentes, dans lequel lesdites grandeurs de régulation concernent, séparément ou en combinaison, la tension (U_{bat}), le courant (I_{bat}) et l'état de charge (SOC) du moyen (10) de stockage d'énergie électrique du véhicule et

6. Procédé selon la revendication 5, dans lequel lesdites grandeurs de régulation comprennent de plus le rapport cyclique d'ouverture (RCO) du circuit d'excitation de l'alternateur.

7. Procédé selon l'une quelconque des revendications 1 à 6, dans lequel lesdites phases de vie sont la décélération, le régime stabilisé et l'accélération du véhicule.

8. Procédé selon la revendication 7, dans lequel, en phase de décélération, la grandeur de régulation est
• la tension (U_{bat}) appliquée au moyen (10) de stockage et la valeur de consigne associée (U_{bat_cns}) une tension de lestage (Uₗₑₛₜ) définie en fonction de l'état de charge (SOC) et de la température (T) dudit moyen (10) de stockage, ou
• le rapport cyclique d'ouverture (RCO) du circuit d'excitation de l'alternateur (20) et la valeur de consigne associée (RCO_{_cns}) à une valeur donnée dudit rapport cyclique d'ouverture.

9. Procédé selon l'une quelconque des revendications 7 à 8, dans lequel, à l'issue de la phase de décélération, la grandeur de régulation est l'état de charge (SOC) du moyen (10) de stockage et la valeur de consigne associée (SOC_{_cns}) une valeur de l'état de charge correspondant à un rendement de charge optimal dudit moyen de stockage.

10. Procédé selon I l'une quelconque des revendications 7 à 9, dans lequel, en régime stabilisé, la grandeur de régulation est la tension (U_{ba}t) appliquée au moyen (10) de stockage et la valeur de consigne associée (U_{bat_cns}) une tension de stabilisé (U_{stab}) définie en fonction de l'état de charge (SOC) et de la température (T) dudit moyen (10) de stockage.

11. Procédé selon l'une quelconque des revendications 7 à 10, dans lequel, en régime stabilisé, la grandeur de régulation est le courant (I_{bat}) dans le moyen (10) de stockage et la valeur de consigne associée (I_{bat_cns}) une valeur de courant sensiblement nulle.

12. Procédé selon l'une quelconque des revendications 7 à 11, dans lequel, en phase d'accélération, la grandeur de régulation est la tension (U_{bat}) appliquée au moyen (10) de stockage et la valeur de consigne associée (U_{bat_cns}) une tension de délestage (U_{delest}) définie en fonction de l'état de charge (SOC) et de la température (T) dudit moyen (10) de stockage.

13. Procédé selon l'une quelconque des revendications 7 à 11, dans lequel, en phase d'accélération, la grandeur de régulation est le courant (I_{bat}) dans le moyen (10) de stockage et la valeur de consigne associée (I_{bat-cns}) une valeur de courant sensiblement nulle.

14. Procédé selon l'une des revendications 10 ou 13, dans lequel ladite valeur de consigne (U_{bat_cns}) est une combinaison des tensions de stabilisé (U_{stab}) et de délestage (U_{delest}) définie en fonction du rendement de charge du moyen (10) de stockage.

15. Procédé selon l'une quelconque des revendications 4, 6 ou 8, dans lequel la valeur du rapport cyclique d'ouverture (RCO) est limitée à une fraction donnée du rapport cyclique d'ouverture de saturation de l'alternateur.

## Patentansprüche

1. Verfahren zum Steuern einer Wechselstromlichtmaschine (20) eines Kraftfahrzeugs in Abhängigkeit von Lebensphasen des Fahrzeugs, wobei die Wechselstromlichtmaschine geeignet ist, ein Mittel (10) zum Speichern elektrischer Energie des Fahrzeugs zu versorgen, das Schritte aufweist, die aus Folgendem bestehen:
- Definieren der Regulierungsgrößen (U_{bat}, I_{bat}, SOC, RCO) für das Steuern der Wechselstromlichtmaschine (20),
- Messen der Zustandsparameter (U_{bat}, I_{bat}, SOC, T, RCO), die mindestens das Speichermittel (10) betreffen,
- Erfassen der aktuellen Lebensphase des Fahrzeugs,
- Berechnen in Echtzeit eines Sollwerts (U_{bat_cns}, I_{bat_cns}, SOC_{_cns}, RCO__{cns}) für jede Regulierungsgröße in Abhängigkeit von den Messwerten der Zustandsparameter und der aktuellen Lebensphase,
**dadurch gekennzeichnet, dass** es noch die Schritte umfasst, die aus Folgendem bestehen:
- Auswählen einer Regulierungsgröße in Abhängigkeit von den Messwerten der Zustandsparameter und der aktuellen Lebensphase,
- Anwenden an die Wechselstromlichtmaschine einer Regulierungsspannung, die geeignet ist, den Wert der ausgewählten Regulierungsgröße auf dem dazugehörenden Sollwert zu halten.

2. Verfahren nach Anspruch 1, wobei die Zustandsparameter und/oder die Regulierungsgrößen auch die Wechselstromlichtmaschine (20) betreffen.

3. Verfahren nach Anspruch 1 oder 2, wobei die Zustandsparameter getrennt oder in Kombination die Spannung (U_{bat}), den Strom (I_{bat}), den Ladezustand (SOC) und die Temperatur (T) des Speichermittels (10) betreffen.

4. Verfahren nach Anspruch 3, wobei die Zustandsparameter das zyklische Öffnungsverhältnis (RCO) der Erregungsschaltung der Wechselstromlichtmaschine (20) umfassen.

5. Verfahren nach einem der vorstehenden Ansprüche, wobei die Regulierungsgrößen getrennt oder in Kombination die Spannung (U_{bat}), den Strom (I_{bat}) und den Ladezustand (SOC) des Mittels (10) zum Speichern elektrischer Energie des Fahrzeugs betreffen, und

6. Verfahren nach Anspruch 5, wobei die Regulierungsgrößen außerdem das zyklische Öffnungsverhältnis (RCO) der Erregungsschaltung der Wechselstromlichtmaschine umfassen.

7. Verfahren nach einem der Ansprüche 1 bis 6, wobei die Lebensphasen die Verlangsamung, die stabilisierte Drehzahl und die Beschleunigung des Fahrzeugs sind.

8. Verfahren nach Anspruch 7, wobei die Regulierungsgröße in der Verlangsamungsphase
• die Spannung (U_{bat}) ist, die an das Speichermittel (10) angelegt wird, und der dazu gehörende Sollwert (U_{bat_cns}) eine Belastungsspannung (Uₗₑₛₜ) ist, die in Abhängigkeit von dem Ladezustand (SOC) und der Temperatur (T) des Speichermittels (10) definiert ist, oder
• das zyklische Öffnungsverhältnis (RCO) der Erregungsschaltung der Wechselstromlichtmaschine (20) und der dazu gehörende Sollwert (RCO_{_cns}) an einem gegebenen Wert des zyklischen Öffnungsverhältnisses ist.

9. Verfahren nach einem der Ansprüche 7 bis 8, wobei am Ende der Verlangsamungsphase die Regulierungsgröße der Ladezustand (SOC) des Speichermittels (10) ist und der dazu gehörende Sollwert (SOC_{_cns}) ein Wert des Ladezustands ist, der einem optimalen Ladeertrag des Speichermittels entspricht.

10. Verfahren nach einem der Ansprüche 7 bis 9, wobei bei stabilisierter Drehzahl die Regulierungsgröße die Spannung (U_{bat}) ist, die an das Speichermittel (10) angelegt ist, und der dazu gehörende Sollwert (U_{bat_cns}) eine stabilisierte Spannung (U_{stab}) ist, die in Abhängigkeit von dem Ladezustand (SOC) und der Temperatur (T) des Speichermittels definiert ist.

11. Verfahren nach einem der Ansprüche 7 bis 10, wobei die Regulierungsgröße bei stabilisierter Drehzahl der Strom (I_{bat}) in dem Speichermittel (10) ist und der dazu gehörende Sollwert (I_{bat_cns}) ein Stromwert im Wesentlichen gleich null ist.

12. Verfahren nach einem der Ansprüche 7 bis 11, wobei die Regulierungsgröße bei der Beschleunigungsphase die Spannung (U_{bat}) ist, die an das Speichermittel angelegt wird, und der dazu gehörende Sollwert (U_{bat_cns}) eine Abwerfspannung (U_{delest}) ist, die in Abhängigkeit von dem Ladezustand (SOC) und der Temperatur (T) des Speichermittels (10) definiert ist.

13. Verfahren nach einem der Ansprüche 7 bis 11, wobei die Regulierungsgröße in der Beschleunigungsphase der Strom (I_{bat}) in dem Speichermittel (10) ist, und der dazu gehörende Sollwert (I_{bat_cns}) ein Stromwert im Wesentlichen gleich null ist.

14. Verfahren nach einem der Ansprüche 10 oder 13, wobei der Sollwert (U_{bat_cns}) eine Kombination der stabilisierten Spannung (U_{stab}) und der Abwerfspannung (U_{delest}) ist, die in Abhängigkeit von dem Ladeertrag des Speichermittels (10) definiert beschränkt ist.

15. Verfahren nach einem der Ansprüche 4, 6 oder 8, wobei der Wert des zyklischen Öffnungsverhältnisses (RCO) auf einen gegebenen Bruchteil des zyklischen Sättigungsöffnungsverhältnisses der Wechselstromlichtmaschine ist.

## Claims

1. A method of controlling an automobile alternator (20) as a function of life phases of the vehicle, said alternator being able to supply a means (10) for storing electrical energy of said vehicle, including steps consisting of:
- defining control values (U_{bat}, I_{bat}, SOC, RCO) for controlling the alternator (20),
- measuring status parameters (U_{bat}, I_{bat}, SOC, T, RCO) concerning at least said storage means (10),
- acquiring the current life phase of the vehicle,
- calculating in real time a setpoint value (U_{bat_cns}, I_{bat_cns}, SOC__{cns}, RCO__{cns}) for each control value as a function of the measured values of the status parameters and of said current life phase,
**characterized in that** it further includes the steps consisting of:
- selecting a control value as a function of the measured values of the status parameters and of said current life phase,
- applying to the alternator a control voltage able to maintain the value of the control value selected at the associated setpoint value.

2. The method according to claim 1, in which said status parameters and/or said control values also concern the alternator (20) .

3. The method according to claim 1 or 2, in which said status parameters concern, separately or in combination, the voltage (U_{bat}), the current (I_{bat}), the charge status (SOC) and the temperature (T) of said storage means (10).

4. The method according to claim 3, in which said status parameters include the opening cycle ratio (RCO) of the excitation circuit of the alternator (20).

5. The method according to one of the preceding claims, in which said control values concern, separately or in combination, the voltage (U_{bat}), the current (I_{bat}) and the charge status (SOC) of the means (10) for storing electrical energy of the vehicle and

6. The method according to claim 5, in which said control values include in addition the opening cycle ratio (RCO) of the excitation circuit of the alternator.

7. The method according to any one of claims 1 to 6, in which said life phases are the deceleration, the steady speed and the acceleration of the vehicle.

8. The method according to claim 7, in which, in deceleration phase, the control value is
• the voltage (U_{bat}) applied to the storage means (10) and the associated setpoint value (U_{bat_cns}) a ballast voltage (Uₗₑₛₜ) defined as a function of the charge status (SOC) and of the temperature (T) of said storage means (10), or
• the opening cycle ratio (RCO) of the excitation circuit of the alternator (20) and the associated setpoint value (RCO_{_cns}) to a given value of said opening cycle ratio.

9. The method according to any one of claims 7 to 8, in which, at the conclusion of the deceleration phase, the control value is the charge status (SOC) of the storage means (10) and the associated setpoint value (SOC__{cns}) a value of the charge status corresponding to an optimum charge efficiency of said storage means.

10. The method according to any one of claims 7 to 9, in which, at steady speed, the control value is the voltage (U_{bat}) applied to the storage means (10) and the associated setpoint value (U_{bat_cns}) a stabilisation voltage (U_{stab}) defined as a function of the charge status (SOC) and of the temperature (T) of said storage means (10).

11. The method according to any one of claims 7 to 10, in which, at steady speed, the control value is the current (I_{bat}) in the storage means (10) and the associated setpoint value (I_{bat_cns}) a substantially zero current value.

12. The method according to any one of claims 7 to 11, in which, in acceleration phase, the control value is the voltage (U_{bat}) applied to the storage means (10) and the associated setpoint value (U_{bat_cns}) a ballast voltage (U_{delest}) defined as a function of the charge status (SOC) and of the temperature (T) of said storage means (10).

13. The method according to any one of claims 7 to 11, in which, in acceleration phase, the control value is the current (I_{bat}) in the storage means (10) and the associated setpoint value (I_{bat_cns}) a substantially zero current value.

14. The method according to one of claims 10 or 13, in which said setpoint value (U_{bat_cns}) is a combination of the stabilisation (U_{stab}) and ballast (U_{delest}) voltages defined as a function of the charge efficiency of the storage means (10).

15. The method according to any one of claims 4, 6 or 8, in which the value of the opening cycle ratio (RCO) is limited to a given fraction of the saturation opening cycle ratio of the alternator.
